(19) Europäisches Patentamt
European Patent Office
Office européen des brevets

(11) **EP 4 390 775 A1**

(12) **EUROPEAN PATENT APPLICATION**

(43) Date of publication:
**26.06.2024 Bulletin 2024/26**

(21) Application number: **23217672.7**

(22) Date of filing: **18.12.2023**

(51) International Patent Classification (IPC):
**G06N 3/092** $^{(2023.01)}$ **G06N 5/04** $^{(2023.01)}$

(52) Cooperative Patent Classification (CPC):
**G06N 5/04; G06N 3/092**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **23.12.2022 IN 202221074993**

(71) Applicant: **Tata Consultancy Services Limited Maharashtra (IN)**

(72) Inventors:
• **BHAVSAR, KARAN RAJESH**
  **400601 Thane (West) - Maharashtra (IN)**
• **KIMBAHUNE, SANJAY MADHUKAR**
  **400601 Thane (West) - Maharashtra (IN)**
• **KHASNOBISH, ANWESHA**
  **700160 Kolkata - West Bengal (IN)**
• **GHOSE, AVIK**
  **700160 Kolkata - West Bengal (IN)**

(74) Representative: **Goddar, Heinz J.**
**Boehmert & Boehmert**
**Anwaltspartnerschaft mbB**
**Pettenkoferstrasse 22**
**80336 München (DE)**

(54) **RECOMMENDING SENSORS FOR AN APPLICATION USING ELEMENTS OF SERVICE-ORIENTED-ARCHITECTURE AND DESIGN (SOAD)**

(57) Sensors are regularly used to understand physical processing by computing systems and measuring physical quantities using principles of Physics which are then calibrated to yield the value and unit of interest. Some works have tried to generalize analytics across domains. However, they do not consider the problem of selecting sensors for a given application or having sensors as a service bouquet for application developer. Embodiments herein provide a method and system for recommending sensors for an application using elements of service-oriented-architecture and design (SOAD). Herein, the system contains a catalog of services which contain sensors and associated pipelines. These pipelines are used by the application developer along with calibration and fusion models through an Integrated Development and Prototyping Environment (IDPE). The IDPE is used to create application specific artificial intelligence (AI) models which get validated/modified based on prototype environment using the IDPE, which is capable of accepting application deployment data.

Start

Receiving, via an input/output interface, a problem description from a user to recommend one or more sensors and associated pipelines for an application — 402

Generating a knowledge graph using a model driven development framework — 404

Analyzing the problem description by traversing through the generated knowledge graph to recommend at least one relevant domain from the set of domains — 406

Generating an application concept from the received problem concept to map with a concept of one or more sensors by running a reinforcement learning (RL) agent — 408

Recommending at least one of the one or more sensors of the at least one relevant domain by performing a finite element analysis (FEA) on mapping outcome — 410

Generating a design of the application based on the recommended at least one sensor and an associated pre-processing pipeline — 412

Stop

**FIG. 4**

## Description

CROSS-REFERENCE TO RELATED APPLICATIONS AND PRIORITY

The present application claims priority from Indian patent application number 202221074993, filed on December 23, 2022.

TECHNICAL FIELD

The disclosure herein generally relates to the field of sensors-based applications and more particularly, to a method and system for recommending one or more sensors for an application using one or more elements of service-oriented-architecture and design (SOAD).

BACKGROUND

Sensors are regularly used to understand physical processing by computing systems. They measure physical quantities using principles of Physics which are then calibrated to yield the value and unit of interest. The data is digitized and sampled to be stored, more often than not, as a time-series. With the advent of technologies like Internet of Things (IoT) and Artificial intelligence (AI), sensors are getting increasingly integrated into decision making processes in supply chain management, optimization, planning, manufacturing, and quality inspection.

The spectrum of sensor-based applications is fairly broad. Entirely new sensing methods are being devised, as for example a fiber optic-based garment, and somewhere, age old module like capacitive touch screen of a mobile phone is repurposed as a cardiac monitor. However, often pipelines have to be customized for the sensor, the deployment scenario, and the application. This takes up a lot of time of the researchers and engineers in this domain.

Existing works have concentrated in one domain like intelligent telemetry, and mostly concentrates on analytics and insights based on existing sensors. Some works have tried to generalize analytics across domains. However, they do not consider the problem of selecting sensors for a given application or having sensors as a service bouquet for application developer. Some recent works have tried to look at sensor analytics on the edge, however, they do not allow for development and deployment of sensor services for prototyping.

SUMMARY

Embodiments of the disclosure present technological improvements as solutions to one or more of the above-mentioned technical problems recognized by the inventors in conventional systems. For example, in one embodiment, a method and system for recommending one or more sensors for an application using one or more elements of service-oriented-architecture and design (SOAD) is provided.

In one aspect, a processor-implemented method for recommending one or more sensors for an application using one or more elements of service-oriented-architecture and design (SOAD). The processor-implemented method comprising receiving a problem description from a user to recommend one or more sensors and associated pipelines for an application, generating a knowledge graph using a model driven development framework, and analyzing the received problem description by traversing through the generated knowledge graph to recommend at least one relevant domain from the set of domains. Further, the method comprising generating an application concept from the received problem description by mapping with a concept of one or more sensors by running a reinforcement learning (RL) agent, recommending at least one of the one or more sensors of the at least one relevant domain by performing a finite element analysis (FEA) on mapping outcome and generating a design of the application based on the recommended at least one sensor and an associated pre-processing pipeline.

In another aspect, a system for recommending one or more sensors for an application using one or more elements of service-oriented-architecture and design (SOAD) is provided. The system includes an input/output interface configured to receive a problem description from a user for one or more sensors and associated pipelines. Furthermore, the system is configured to generate a knowledge graph using a model driven development framework, analyze the received problem description by traversing through the generated knowledge graph to recommend at least one relevant domain from the set of domains, generate an application concept from the received problem description by mapping with a concept of one or more sensors by running a reinforcement learning (RL) agent, recommend at least one of the one or more sensors of the at least one relevant domain by performing a finite element analysis (FEA) on mapping outcome, and to generate a design of the application based on the recommended at least one sensor and an associated pre-processing pipeline.

In yet another aspect, one or more non-transitory machine-readable information storage mediums are provided comprising one or more instructions, which when executed by one or more hardware processors causes a method for recommending one or more sensors for an application using one or more elements of service-oriented-architecture and design (SOAD). The processor-implemented method comprising receiving a problem description from a user to recommend one or more sensors and associated pipelines for an application, generating a knowledge graph using a model driven development framework, and analyzing the received problem description by traversing through the generated knowledge graph to recommend at least one relevant domain from the set of domains. Further, the method comprising generating an application concept from the received problem description by mapping with a concept of one or more sensors by running a reinforcement learning (RL) agent, recommending at least one of the one or more sensors of the at least one relevant domain by performing a finite element analysis (FEA) on mapping outcome and generating a design of the application based on the recommended at least one sensor and an associated pre-processing pipeline.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates a block diagram of an exemplary system for recommending one or more sensors for an application, in accordance with some embodiments of the present disclosure.
FIG. 2 is a block diagram to illustrate one or more elementary components to build services, in accordance with some embodiments of the present disclosure.
FIG. 3 (FIG. 3A through FIG. 3C) is a schematic diagram to illustrate services to connect and communicate with one another using an observer-pattern, in accordance with some embodiments of the present disclosure.
FIG. 4 is a flow chart to illustrate a method for recommending one or more sensors for an application, in accordance with some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Existing systems and methods provide mechanisms to provision new hardware elements or software elements like sensors, devices, algorithms, preprocessors, model-based simulation components. Either the system maintainer, or subject matter experts or even the user can extend the system by adding these new elements. While these new elements are added by a user to provide whatever information is available/known to describe the element being added. For example, a sensor may have a user manual/specification document/datasheet from an original equipment manufacturer (OEM). Existing methods limited to term frequency-inverse document frequency (TFIDF) to generate ontology while methods such as a Finite Element Analysis (FEA), a Principal component analysis (PCA), a model driven development (MDD) and a dependency graph provide connections between elements to establish workflows.

Usually, the user is provided with an interface to describe problem statement and a questionnaire based on data collection. Existing systems analyze the information provided in the problem statement to make recommendations. So, the user end-up with a sensor and application concept space. There are methods of mapping two concepts using a policy. However, in this diverse scenario the sensors to application mapping may not be obvious. Further, the data driven management method requires labelled data, which is not possible in this case.

Therefore, the embodiments herein provide a method and system for recommending one or more sensors for an application using one or more elements of service-oriented-architecture and design (SOAD). A knowledge-based reinforcement learning is designed to measure physical quantities, and a physics-based policy for the reinforcement learning framework to map sensors concepts to application concepts to recommend sensors. A reward signal is a successful finite element analysis and a simulation testing in virtual deployment scenario. Based on the same, the sensors are recommended by the system.

Herein, the system contains a catalog of services which contain sensors and associated pipelines. It must be noted that one sensor or group of sensors (composite sensors like the inertial measurement units) may have more than one associated pipeline depending on what they are being used to measure. These pipelines are used by the application developer along with calibration and fusion models through an Integrated Development and Prototyping Environment (IDPE). The IDPE may be used to create application specific artificial intelligence (AI) models which get validated/modified based on prototype environment using the IDPE, which is capable of accepting application deployment data.

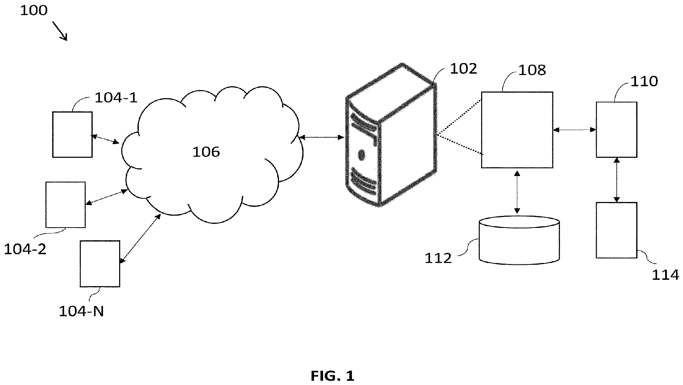

Referring now to the drawings, and more particularly to FIG. 1 through FIG. 4, where similar reference characters denote corresponding features consistently throughout the figures, there are shown preferred embodiments and these embodiments are described in the context of the following exemplary system and/or method.

FIG. 1 illustrates a network diagram of a system 100 for enabling conversational reverse engineering and understanding of software application. Although the present disclosure is explained considering that the system 100 is implemented on a server, it may also be present elsewhere such as a local machine. It may be understood that the system 100 comprises one or more computing devices 102, such as a laptop computer, a desktop computer, a notebook, a workstation, a cloud-based computing environment and the like. It will be understood that the system 100 may be accessed through one or more input/output interfaces 104-1, 104-2... 104-N, collectively referred to as I/O interface 104. Examples of the I/O interface 104 may include, but are not limited to, a user interface, a portable computer, a personal digital assistant, a handheld device, a smartphone, a tablet computer, a workstation and the like. The I/O interface 104 are communicatively coupled to the system 100 through a network 106.

In an embodiment, the network 106 may be a wireless or a wired network, or a combination thereof. In an example, the network 106 can be implemented as a computer network, as one of the different types of networks, such as virtual private network (VPN), intranet, local area network (LAN), wide area network (WAN), the internet, and such. The network 106 may either be a dedicated network or a shared network, which represents an association of the different types of networks that use a variety of protocols, for example, Hypertext Transfer Protocol (HTTP), Transmission Control Protocol/Internet Protocol (TCP/IP), and Wireless Application Protocol (WAP), to communicate with each other. Further, the network 106 may include a variety of network devices, including routers, bridges, servers, computing devices, storage devices. The network devices within the network 106 may interact with the system 100 through communication links.

The system 100 may be implemented in a workstation, a mainframe computer, a server, and a network server. In an embodiment, the computing device 102 further comprises one or more hardware processors 108, one or more memory 110, hereinafter referred as a memory 110 and a data repository 112, for example, a repository 112. The data repository 112 may also be referred as a dynamic knowledge base 112 or a knowledge base 112. The memory 110 is in communication with the one or more hardware processors 108, wherein the one or more hardware processors 108 are configured to execute programmed instructions stored in the memory 110, to perform various functions as explained in the later part of the disclosure. The repository 112 may store data processed, received, and generated by the system 100. The memory 110 further comprises a plurality of modules. The plurality of modules is configured to perform various functions.

The system 100 supports various connectivity options such as BLUETOOTH®, USB, ZigBee and other cellular services. The network environment enables connection of various components of the system 100 using any communication link including Internet, WAN, MAN, and so on. In an exemplary embodiment, the system 100 is implemented to operate as a stand-alone device. In another embodiment, the system 100 may be implemented to work as a loosely coupled device to a smart computing environment. The components and functionalities of the system 100 are described further in detail.

In an embodiment, the one or more I/O interfaces 104 of the system 100 are configured to receive a problem description from a user for one or more sensors and associated pipelines, wherein the problem description illustrates a set of domains of an application.

In another embodiment, the system 100 is configured to generate a knowledge graph using a model driven development (MDD) framework. The knowledge graph includes one or more capabilities of the one or more sensors, and specifications of the set of domains. Further, the knowledge graph generates an ontology using a TF-IDF technique from the received problem descriptions. A knowledge base and one or more workflow pipelines are generated using the model driven development framework.

In yet another embodiment, the system 100 is configured to analyze the received problem description by traversing through the generated knowledge graph to recommend at least one relevant domain from the set of domains. Further, the system 100 generates an application concept from the received problem description by mapping with a concept of one or more sensors by running a reinforcement learning (RL) agent.

A reward function design for proper convergence is an issue with the reinforcement learning (RL) agent. Since, linearity is expected with improvements, the system 100 selects a linear reward signal. However, there are two objectives, firstly a good mapping to the application concepts and secondly a good score in the deployment simulation. The system 100 normalizes both scores between 0 and 1 using a standard normalization technique. The reward signal is as provided below:

$$reward = \alpha * Score_{mapping} + (1-\alpha) * Score_{simulation} \qquad (1)$$

wherein $\alpha$ is an application dependent parameter. Since, the product is complimentary it can be used to weight and normalize the reward for better convergence. Hence, the reward for better convergence.

It would be appreciated that a complimentary filter is used when two methods provide same measurement. To weigh them in, the system has two criteria to recommend same entity and weigh in similar fashion. The complimentary filter-based reward signal includes two components for a successful mapping and a successful deployment.

In another embodiment, the system 100 is configured to recommend at least one of the one or more sensors of the at least one relevant domain by performing a finite element analysis (FEA) on mapping outcome. It would be appreciated that the at least one sensor is recommended based if reward of the outcome is maximized else iterating mapping with the concept of one or more sensors by running the reinforcement learning (RL) agent.

Finally, the system 100 generates a design of the application based on the recommended at least one sensor and an associated pre-processing pipeline.

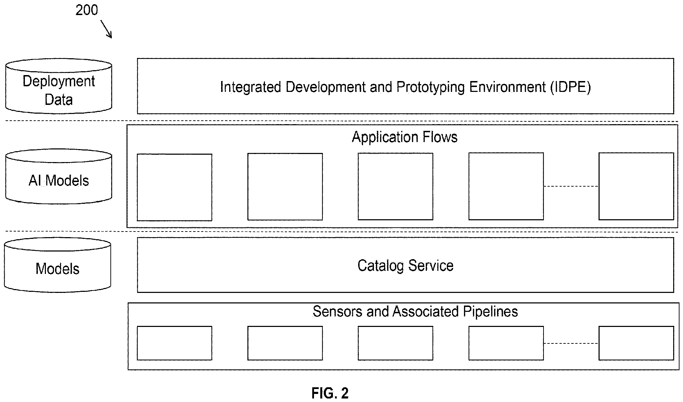

Referring FIG. 2, a schematic diagram 200 to illustrate one or more elementary components to build services like data ingestion, data pre-processing service, an executor service for algorithms and call back for sharing results to applications. The system 100 is configured to implement the one or more elementary components, wherein each of the one or more elementary components grouped together in different combinations to fulfill various services. The one or more elementary components includes a sensor data ingestor, a data lake component for storage, a group of components implementing observe pattern. The one or more elementary components enable subscribing to various events and act upon them as they occur. The one or more elementary components are designed to be agnostic to sensor type, data type and algorithms.

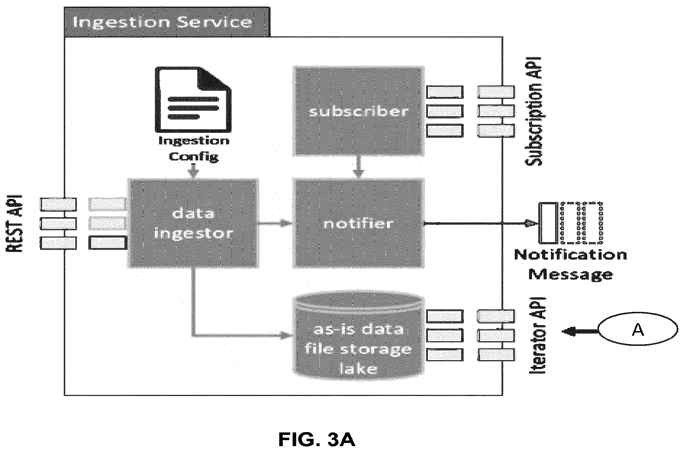

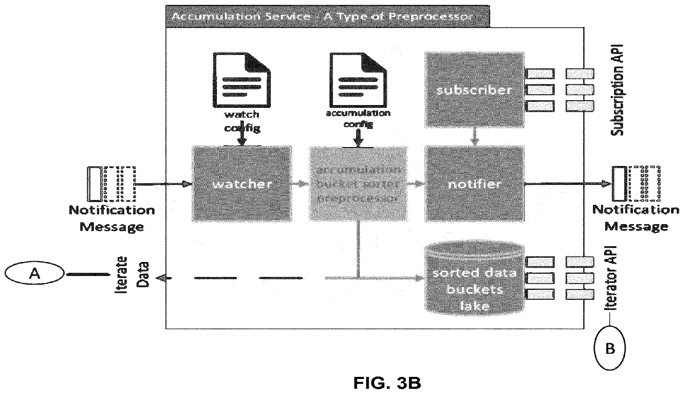

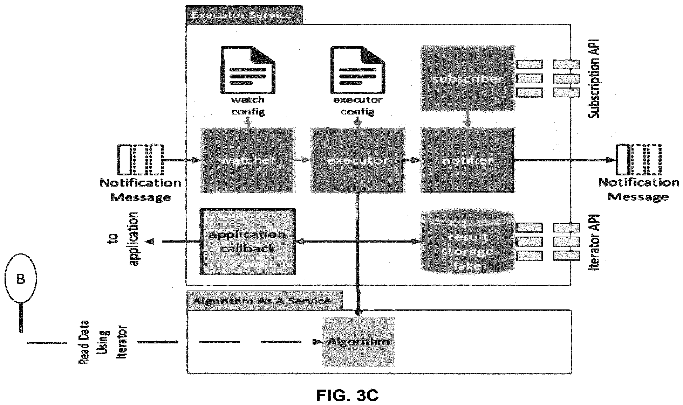

The services shown in FIG. 3A through FIG. 3C are designed to connect and communicate with one another using observer-pattern. This subscription-based design enables constructing data processing pipelines. The connections between different services are established as per the configuration file describing data-structure compatibility between services. Data-structures are defined using Uniform Data Exchange Model (UDEM).

In one example, wherein a radar based in-body imaging is an application that requires knowledge of both human anatomy as well as radar signal processing and associated artificial intelligence (AI) models for image construction. Further, the one or more sensors are configured against a generic human phantom and then based on application it is tuned to specific anatomy. This clearly shows how creating the base sensor specific pipeline along with sensor design saves both effort and time.

In another example, wherein nano sensors have high resolution of sensing but less selectivity to a particular compound. However, AI based models can detect patterns under different conditions that can bring selectivity to a specific compound.

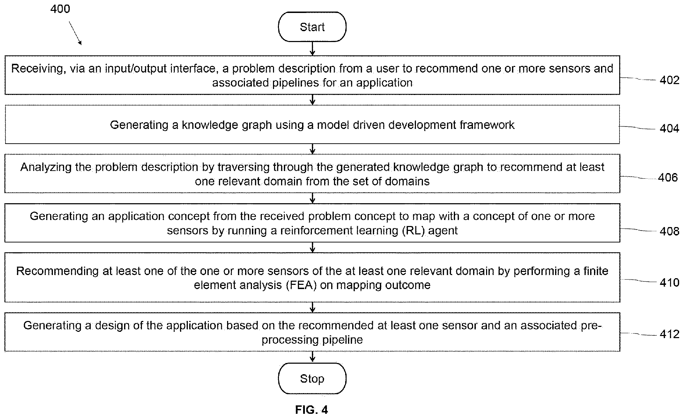

Referring FIG. 4, a flow diagram 400 to illustrate a processor-implemented method for recommending one or more sensors for an application using one or more elements of service-oriented-architecture and design (SOAD), in accordance with an example embodiment.

Initially at step 402, a problem description is received, via an input/output interface, from a user to recommend one or more sensors and associated pipelines for an application, wherein the problem description illustrates a set of domains of the application. For example, a significant portion of ageing people are living alone and away from their children. With growing age people overtime may lose their ability to balance themselves while walking, standing, or sitting. This puts the ageing people at risk of falling and suffering serious injuries. Upon analysis, the system detects the domain of human-sensing, elderly-care, remote-sensing, motion-sensing, etc.

At the next step 404, a knowledge graph is generated, via one or more hardware processors, using a model driven development framework, wherein the knowledge graph includes one or more capabilities of the one or more sensors, and specifications of the set of domains. The knowledge base is used to speed up sensing element development. The design of sensor requires study of existing knowledge base on molecular dynamics. For example, in Microfluidics surface tension or Renault's number becomes a dominant property. Hence, there is a need for a nano-scale domain knowledge repository which can aid in a sensor development.

At the next step 406, the received problem description is analyzed, via one or more hardware processors, by traversing through the generated knowledge graph to recommend at least one relevant domain from the set of domains.

At the next step 408, an application concept is generated, via the one or more hardware processors, based on the received problem description by mapping with a concept of one or more sensors by running a reinforcement learning (RL) agent. The RL agent-based method is employed where a domain guided AI agent searches through the sensor space for best possible sensor. For example, the nano-sensors have high resolution of sensing but less selectivity to a specific volatile organic compound. However, the AI based models detect patterns under different conditions that can bring selectivity to the specific volatile organic compound.

At the next step 410, at least one sensor of the one or more sensors is recommended by performing a finite element analysis (FEA) on mapping outcome. A reward signal is a successful FEA and simulation testing in virtual deployment scenario, based on the same, the sensors are recommended by the system 100.

Finally at the last step 412, a solution design of the application is generated based on the recommended at least one sensor and an associated pre-processing pipeline. The solution design may allow users to quickly integrate the at least one sensor and the associated pre-processing pipelines along with statistical, machine learning and deep learning models. It enables users to (a) quickly choose the sensors that can be useful for the target applications, (b) validate and integrate the required selectivity and accuracy of the sensors for the application in mind, (c) run simulations and experiments using the sensor with existing pipelines and models and (d) use existing pipelines to train new models for the given set of sensors for the desired application.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein address the problem of selecting sensors for a given application or having sensors as a service bouquet for application developer. Some recent works have tried to look at sensor analytics on the edge, however, they do not allow for development and deployment of sensor services for prototyping. Embodiments herein provide a method and system for recommending sensors for an application using elements of service-oriented-architecture and design (SOAD). Herein, the system contains a catalog of services which contain sensors and associated pipelines. These pipelines are used by the application developer along with calibration and fusion models through an Integrated Development and Prototyping Environment (IDPE). The IDPE is used to create application specific artificial intelligence (AI) models which get validated/modified based on prototype environment using the IDPE, which is capable of accepting application deployment data.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs, GPUs etc.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor-implemented method (400) comprising:

   receiving (402), via an input/output interface, a problem description from a user to recommend one or more sensors and associated pipelines for an application, wherein the problem description illustrates a set of domains of the application;
   generating (404), via one or more hardware processors, a knowledge graph for the received problem description using a model driven development framework;
   analyzing (406), via one or more hardware processors, the received problem description by traversing through the generated knowledge graph to recommend at least one relevant domain from the set of domains;
   generating (408), via the one or more hardware processors, an application concept from the received problem description to map with a concept of one or more sensors by running a reinforcement learning (RL) agent; and
   recommending (410), via the one or more hardware processors, at least one of the one or more sensors of the at least one relevant domain by performing a finite element analysis (FEA) on mapping outcome.

2. The processor-implemented method (400) as claimed in claim 1, further comprising:
   generating (412), via the one or more hardware processors, a design of the application based on the recommended at least one sensor and an associated pre-processing pipeline.

3. The processor-implemented method (400) as claimed in claim 1, wherein the knowledge graph includes one or more capabilities of the one or more sensors, and specifications of the set of domains.

4. The processor-implemented method (400) as claimed in claim 1, wherein a knowledge-based reinforcement learning framework is designed to measure physical quantities.

5. The processor-implemented method (400) as claimed in claim 1, wherein a physics-based policy for the reinforcement learning framework to map the sensor concept to the application concept.

6. A system (100) comprising:

   an input/output interface (102) to receive a problem description from a user for one or more sensors and associated pipelines, wherein the problem description illustrates a set of domains of an application;
   a memory (110) in communication with the one or more hardware processors (108), wherein the one or more hardware processors (108) are configured to execute programmed instructions stored in the memory to;

   generate a knowledge graph for the received problem description using a model driven development framework, wherein the knowledge graph includes one or more capabilities of the one or more sensors, and specifications of the set of domains,
   analyze the received problem description by traversing through the generated knowledge graph to recommend at least one relevant domain from the set of domains;
   generate an application concept from the received problem description to map with a concept of one or more sensors by running a reinforcement learning (RL) agent;
   recommend at least one of the one or more sensors of the at least one relevant domain by performing a finite element analysis (FEA) on mapping outcome; and
   generate a design of the application based on the recommended at least one sensor and an associated pre-processing pipeline.

7. The system (100) as claimed in claim 6, further comprising:
   generating, via the one or more hardware processors, a design of the application based on the recommended at least one sensor and an associated pre-processing pipeline.

8. The system (100) as claimed in claim 6, wherein the knowledge graph includes one or more capabilities of the one or more sensors, and specifications of the set of domains.

9. The system (100) as claimed in claim 6, wherein a knowledge-based reinforcement learning framework is designed to measure physical quantities.

10. The system (100) as claimed in claim 6, wherein a physics-based policy for the reinforcement learning framework to map the sensor concept to the application concept.

11. One or more non-transitory machine-readable information storage mediums comprising one or more instructions which when executed by one or more hardware processors cause:

receiving, via an input/output interface, a problem description from a user to recommend one or more sensors and associated pipelines for an application, wherein the problem description illustrates a set of domains of the application;
generating a knowledge graph for the received problem description using a model driven development framework;
analyzing the received problem description by traversing through the generated knowledge graph to recommend at least one relevant domain from the set of domains;
generating an application concept from the received problem description to map with a concept of one or more sensors by running a reinforcement learning (RL) agent; and
recommending at least one of the one or more sensors of the at least one relevant domain by performing a finite element analysis (FEA) on mapping outcome.

12. The one or more non-transitory machine-readable information storage mediums of claim 11, further comprising: generating a design of the application based on the recommended at least one sensor and an associated pre-processing pipeline.

13. The one or more non-transitory machine-readable information storage mediums of claim 11, wherein the knowledge graph includes one or more capabilities of the one or more sensors, and specifications of the set of domains.

14. The one or more non-transitory machine-readable information storage mediums of claim 11, wherein a knowledge-based reinforcement learning framework is designed to measure physical quantities.

15. The one or more non-transitory machine-readable information storage mediums of claim 11, wherein a physics-based policy for the reinforcement learning framework to map the sensor concept to the application concept.

100

104-1

106

102        108        110

104-2

112        114

104-N

FIG. 1

200

Deployment
Data

Integrated Development and Prototyping Environment (IDPE)

Application Flows

AI Models

Models

Catalog Service

Sensors and Associated Pipelines

FIG. 2

**FIG. 3A**

**FIG. 3B**

**FIG. 3C**

400

```
                          ( Start )
                              ↓
┌─────────────────────────────────────────────────────────────────────────┐
│ Receiving, via an input/output interface, a problem description from a    │
│ user to recommend one or more sensors and associated pipelines for an     │── 402
│ application                                                               │
└─────────────────────────────────────────────────────────────────────────┘
                              ↓
┌─────────────────────────────────────────────────────────────────────────┐
│ Generating a knowledge graph using a model driven development framework   │── 404
└─────────────────────────────────────────────────────────────────────────┘
                              ↓
┌─────────────────────────────────────────────────────────────────────────┐
│ Analyzing the problem description by traversing through the generated     │
│ knowledge graph to recommend at least one relevant domain from the set    │── 406
│ of domains                                                                │
└─────────────────────────────────────────────────────────────────────────┘
                              ↓
┌─────────────────────────────────────────────────────────────────────────┐
│ Generating an application concept from the received problem concept to    │
│ map with a concept of one or more sensors by running a reinforcement      │── 408
│ learning (RL) agent                                                       │
└─────────────────────────────────────────────────────────────────────────┘
                              ↓
┌─────────────────────────────────────────────────────────────────────────┐
│ Recommending at least one of the one or more sensors of the at least one  │
│ relevant domain by performing a finite element analysis (FEA) on mapping  │── 410
│ outcome                                                                   │
└─────────────────────────────────────────────────────────────────────────┘
                              ↓
┌─────────────────────────────────────────────────────────────────────────┐
│ Generating a design of the application based on the recommended at least  │
│ one sensor and an associated pre-processing pipeline                      │── 412
└─────────────────────────────────────────────────────────────────────────┘
                              ↓
                          ( Stop )
```

FIG. 4

# EUROPEAN SEARCH REPORT

Application Number

EP 23 21 7672

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | IBBOTSON JOHN ET AL: "Model-driven SOA for sensor networks", GROUND/AIR MULTISENSOR INTEROPERABILITY, INTEGRATION, AND NETWORKING FOR PERSISTENT ISR II, SPIE, 1000 20TH ST. BELLINGHAM WA 98225-6705 USA, vol. 8047, no. 1, 13 May 2011 (2011-05-13) , pages 1-10, XP060014096, DOI: 10.1117/12.884140 [retrieved on 1901-01-01] * abstract * * 1, 2, 5, 6 * | 1-15 | INV. G06N3/092 G06N5/04 |
| A | CHEN XIAOCONG ET AL: "Knowledge-guided Deep Reinforcement Learning for Interactive Recommendation", 2020 INTERNATIONAL JOINT CONFERENCE ON NEURAL NETWORKS (IJCNN), IEEE, 19 July 2020 (2020-07-19), pages 1-8, XP033831337, DOI: 10.1109/IJCNN48605.2020.9207010 [retrieved on 2020-09-25] * abstract * * I, II, III * * figure 1 * * Algorithms 1, 2 * | 1-15 | |
| A | Ruzana Ishak: "SPLAI: Computational Finite Element Model for Sensor Networks", Mobile information systems, 1 January 2006 (2006-01-01), pages 77-92, XP093156183, DOI: 10.1155/2006/672524 Retrieved from the Internet: URL:https://www.hindawi.com/journals/misy/2006/672524/ * abstract * * 1, 2, 6 * | 1-15 | TECHNICAL FIELDS SEARCHED (IPC) G06N |

The present search report has been drawn up for all claims

| Place of search | Date of completion of the search | Examiner |
|---|---|---|
| The Hague | 26 April 2024 | Keresztury, Bence |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202221074993